# EUROPEAN PATENT SPECIFICATION

(11) **EP 4 481 942 B1**
(45) Date of publication and mention of the grant of the patent: **16.09.2026**
(21) Application number: 23781203.7
(22) Date of filing: 13.03.2023
(51) Int. Cl.: H01Q 1/24, H01Q 13/24, H04M 1/02, G09F 9/30, G06F 1/16, H01Q 9/42, H01Q 21/28, H01Q 5/307

(54) **ELECTRONIC APPARATUS INCLUDING ANTENNA**
ELEKTRONISCHE VORRICHTUNG MIT ANTENNE
APPAREIL ÉLECTRONIQUE COMPRENANT UNE ANTENNE

(30) Priority: 01.04.2022 KR 20220040979; 06.07.2022 KR 20220083324
(43) Date of publication of application: 25.12.2024
(73) Proprietor: Samsung Electronics Co., Ltd., Suwon-si, Gyeonggi-do, 16677 (KR)
(72) Inventor: JUNG, Hojin, Suwon-si, Gyeonggi-do 16677 (KR); KANG, Jooyoung, Suwon-si, Gyeonggi-do 16677 (KR); KANG, Hyunggwang, Suwon-si, Gyeonggi-do 16677 (KR); KIM, Hyunsuk, Suwon-si, Gyeonggi-do 16677 (KR); LEE, Wonho, Suwon-si, Gyeonggi-do 16677 (KR); CHO, Hyoungtak, Suwon-si, Gyeonggi-do 16677 (KR); JI, Youngmin, Suwon-si, Gyeonggi-do 16677 (KR)
(74) Representative: Gulde & Partner
(86) International application number: PCT/KR2023/003359
(87) International publication number: WO 2023/191346

(56) References cited:
- EP-A1- 3 813 343
- KR-A- 20170 087 334
- KR-A- 20190 143 029
- KR-A- 20210 014 801
- KR-A- 20220 027 600
- KR-A- 20220 027 600
- KR-B1- 102 295 237
- KR-B1- 102 295 237

## Description

### [Technical Field]

Various embodiments of the disclosure relate to an electronic device including an antenna.

### [Background Art]

Electronic devices are gradually becoming slimmer and are being improved to increase their rigidity, strengthen their design aspects, and differentiate their functional features. In addition, electronic devices are being developed to have various shapes, departing from a uniform rectangular shape. Electronic devices may have a deformable structure that can provide convenient portability and a large-screen display in use. Electronic devices may have a structure (e.g., a rollable structure or a slidable structure) that can change a display area of a rollable display (e.g., a flexible display) through support of housings that slide relative to each other. Such an electronic device may include at least one antenna using at least one conductive portion that is at least a portion of the outward appearance of the electronic device. In the case that this at least one antenna is applied to the electronic device, a design structure that considers degradation in radiation performance due to sliding operation may be required.

EP 3 813 343 A1 discloses an electronic device comprising a first side surface member with a plurality of conductive parts and at least one first non-conductive part arranged on one surface, a second side surface member movable toward said surface and comprising a sliding cover surface facing the first surface, a flexible display whose exposed portion width varies according to the movement of the second side surface member, and a wireless communication circuit electrically connected to at least one of the conductive parts and configured to transmit or receive RF signals, wherein the sliding cover surface includes at least one second non-conductive part positioned to overlap the first non-conductive part when the side surface members are maximally overlapped, and configured to avoid facing the first non-conductive part when the overlap is minimal or absent.

KR 2022 0027600 A discloses an electronic device comprising a housing with a first housing including a conductive pattern functioning as a radiator and a second housing movably coupled to the first housing, a flexible display arranged within the housing, a plurality of bars attached to a lower end of the flexible display, a rail provided on the side of the housing to which the bars are coupled, and at least one wireless communication circuit arranged within the housing and configured to supply power to the conductive pattern, wherein the rail comprises a first portion extending along a rear surface of the device, a second portion parallel thereto extending along a front surface, and a third portion connecting the first and second portions, such that the conductive pattern may be inserted between the first and second portions of the rail by movement of the second housing or may be operated in a state separated from the rail.

KR 102 295 237 B1 discloses an electronic device comprising a first housing including a first conductive portion, a second housing slidably coupled to the first housing over a defined reciprocating distance and including a second conductive portion that overlaps at least part of the first conductive portion in a slide-in state, a wireless communication circuit arranged within the device and electrically connected to the first conductive portion, and at least one electrical connection structure arranged within a second space of the second housing, the structure electrically connecting the second conductive portion to the first conductive portion in the slide-in state, wherein the wireless communication circuit is configured to transmit and/or receive wireless signals in at least one frequency band via the first and second conductive portions when in the slide-in state.

### [Disclosure of Invention]

### [Technical Problem]

The electronic device may include a rollable electronic device (e.g., a slidable electronic device) in which the display area of the rollable display can be expanded and/or reduced. The rollable electronic device may include a first housing and a second housing at least partially fitted together and movably combined with each other. For example, the first and second housings operate to be slidable relative to each other and support at least a portion of the rollable display (e.g., flexible display, expandable display, or stretchable display), thereby inducing the rollable display to have a first display area in the slide-in state and inducing the rollable display to have a second display area greater than the first display area in the slide-out state.

The rollable electronic device may include a housing that is at least partially formed of a conductive material (e.g., a metallic material or a conductive member) to reinforce rigidity and realize an attractive appearance. The electronic device may include at least one antenna that operates in at least one frequency band through at least one conductive portion disposed in the housing.

However, in the slide-in state of the rollable electronic device in which the second housing slides at least partially into the internal space of the first housing, the conductive member of the second housing used as an antenna may overlap with, thus be close to or come into contact with, the metal portion of the first housing. Due to this, the antenna's radiation performance may deteriorate.

Various embodiments of the disclosure may provide an electronic device including an antenna configured to maintain constant radiation performance regardless of sliding operation.

Various embodiments may provide an electronic device including an antenna configured to reduce the degree of radiation performance degradation in the slide-in state.

However, the problems to be solved in the disclosure are not limited to the above-mentioned problems and may be expanded in various ways without departing from the scope of the disclosure.

### [Solution to Problem]

The invention is defined by the appended claims.

According to various embodiments of the disclosure, an electronic device may include a first housing; a second housing slidably disposed with respect to the first housing wherein left and right lateral portions of the first housing are formed of a metallic material at least in part; a wireless communication circuit disposed in the second housing and configured to transmit or receive a radio signal through a conductive member wherein left and right lateral portions of the second housing are formed of the conductive member at least in part; a rollable display disposed to be supported by the first and second housings and bent or unfolded based on a slide-in or slide-out of the second housing; and at least one dielectric disposed between a metallic material portion of the first housing and the conductive member of the second housing in a slide-in state of the second housing into the first housing.

### [Advantageous Effects of Invention]

The electronic device according to embodiments of the disclosure can reduce the degree of degradation in antenna radiation performance by minimizing interference from surrounding metal materials through the dielectric structure disposed between the first and second housings in the slide-in state.

In addition, various effects explicitly or implicitly appreciated through the disclosure may be provided.

### [Brief Description of Drawings]

In connection with the description of the drawings, the same or similar reference numerals may be used for the same or similar components.
FIG. 1 is a block diagram of an electronic device in a network environment according to various embodiments of the disclosure.
FIGS. 2A and 2B are views illustrating the front and rear surfaces of an electronic device in a slide-in state according to various embodiments of the disclosure.
FIGS. 3A and 3B are views illustrating the front and rear surfaces of an electronic device in a slide-out state according to various embodiments of the disclosure.
FIG. 4 is an exploded perspective view of an electronic device according to various embodiments of the disclosure.
FIG. 5A is a cross-sectional view of an electronic device taken along line 5a-5a of FIG. 2A according to various embodiments of the disclosure.
FIG. 5B is a cross-sectional view of an electronic device taken along line 5b-5b of FIG. 3A according to various embodiments of the disclosure.
FIGS. 6A and 6B are perspective views of an electronic device in slide-in/slide-out states according to various embodiments of the disclosure.
FIG. 7A is a perspective view of an electronic device including a dielectric cover according to various embodiments of the disclosure.
FIG. 7B is a view of an electronic device schematically showing an arrangement structure of an antenna disposed through conductive members of a first lateral member according to various embodiments of the disclosure.
FIGS. 8A and 8B are views illustrating partial cross-sections of an electronic device taken along line 8a-8a of FIG. 6A according to various embodiments of the disclosure.
FIG. 9 is a graph comparing the radiation performance of antennas with and without a dielectric cover according to various embodiments of the disclosure.
FIG. 10 is a perspective view of a first housing according to various embodiments of the disclosure.
FIGS. 11A and 11B are partial cross-sectional views of an electronic device according to various embodiments of the disclosure.
FIGS. 12A and 12B are partial cross-sectional views of an electronic device according to various embodiments of the disclosure.
FIGS. 13A and 13B are views of an electronic device in slide-in/slide-out states according to various embodiments of the disclosure.

### [Mode for the Invention]

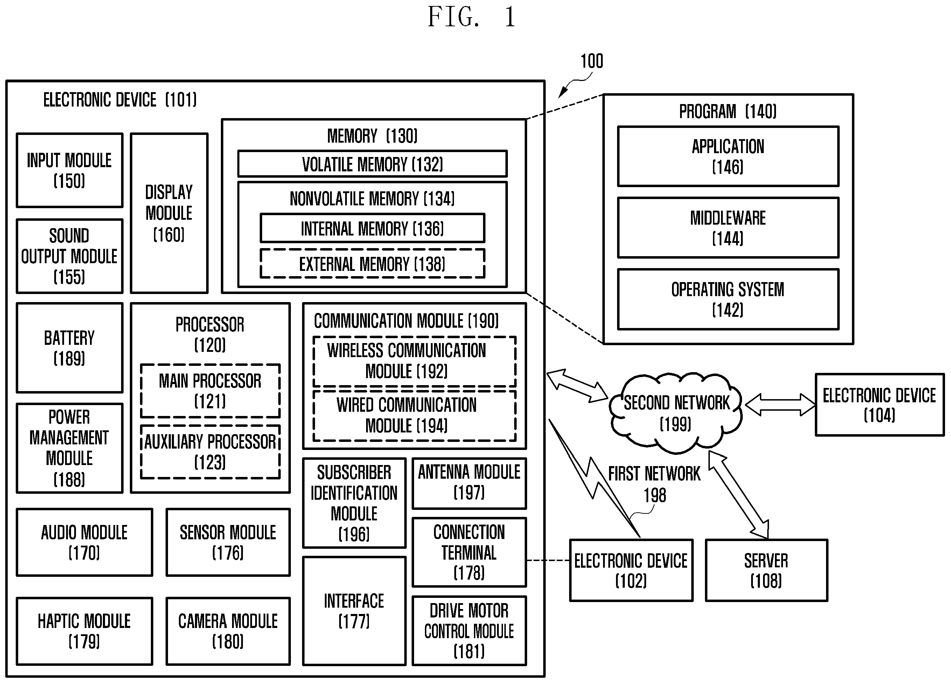

FIG. 1 is a block diagram illustrating an electronic device 101 in a network environment 100 according to various embodiments.

With reference to FIG. **1****,** the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, For example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, For example, a microphone, a mouse, a keyboard, a key (e.g., a button), or a digital pen (e.g., a stylus pen).

The sound output module 155 may output sound signals to the outside of the electronic device 101. The sound output module 155 may include, For example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, For example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, For example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, For example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, For example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, For example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, For example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic device 102 or 104 may be a device of a same type as, or a different type, from the electronic device 101. According to an embodiment, all or some of operations to be executed at the electronic device 101 may be executed at one or more of the external electronic device 102, 104, or 108. For example, if the electronic device 101 should perform a function or a service automatically, or in response to a request from a user or another device, the electronic device101, instead of, or in addition to, executing the function or the service, may request the one or more external electronic devices to perform at least part of the function or the service. The electronic device 101 may provide the outcome, with or without further processing of the outcome, as at least part of a reply to the request. To that end, a cloud computing, distributed computing, mobile edge computing (MEC), or client-server computing technology may be used, For example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

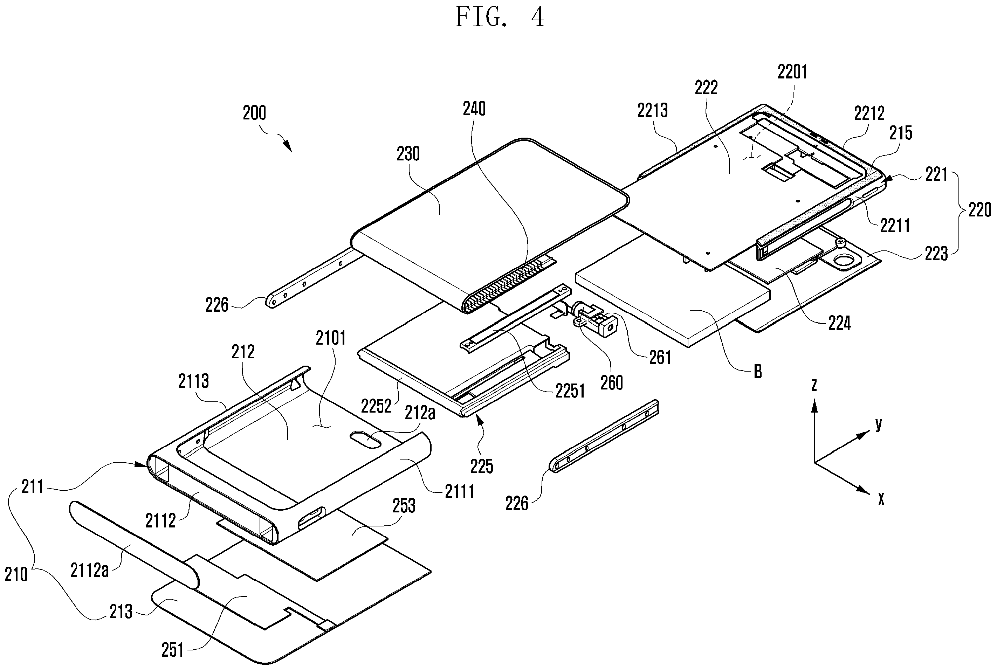

According to various embodiments, the sensor module 176 may include a movement distance detection sensor to detect a movement distance of a second housing (e.g., a second housing 220 in FIG. 4) from a first housing (e.g., a first housing 210 in FIG. 4) of an electronic device (e.g., an electronic device 200 of FIG. 4). In one embodiment, through movement of the second housing 220 from the first housing 210, the sensor module 176 may detect a slide-in state being a first state, a slide-out state being a second state, or an intermediate state being a third state between the slide-in state and the slide-out state. In a certain embodiment, the processor 120 may detect the movement distance in real time through the sensor module 176 while the second housing 220 is moved from the first housing 210, and control the display module 160 to display an object in correspondence to the changing display area through a flexible display (e.g., flexible display 230 in FIG. 4). In one embodiment, the electronic device 101 may include a drive motor control module 181 to control the operation of a drive motor (e.g., DC motor or stepping motor) (e.g., drive motor 260 in FIG. 4) disposed inside the electronic device. In an embodiment, the drive motor control module 181 may be replaced by the processor 120.

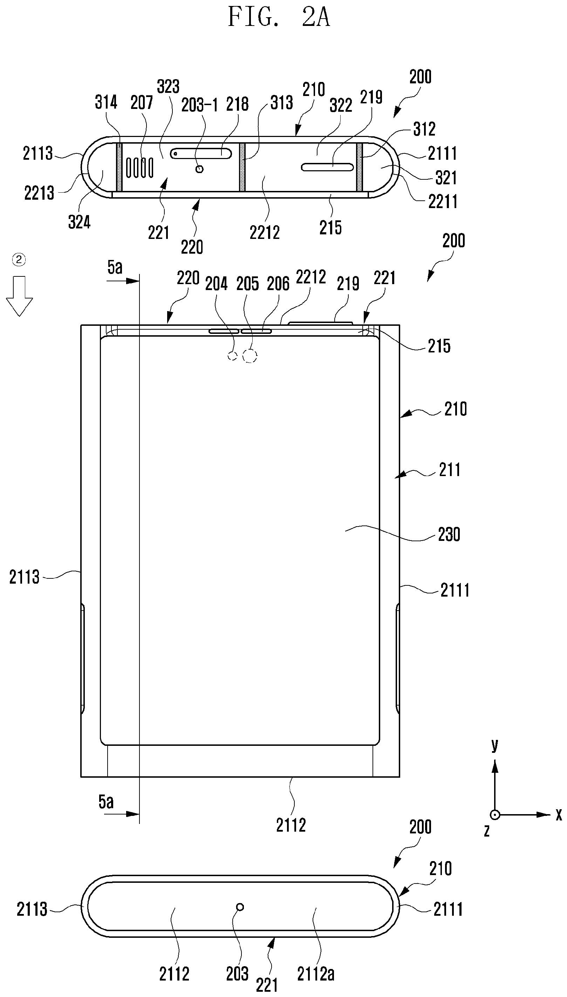

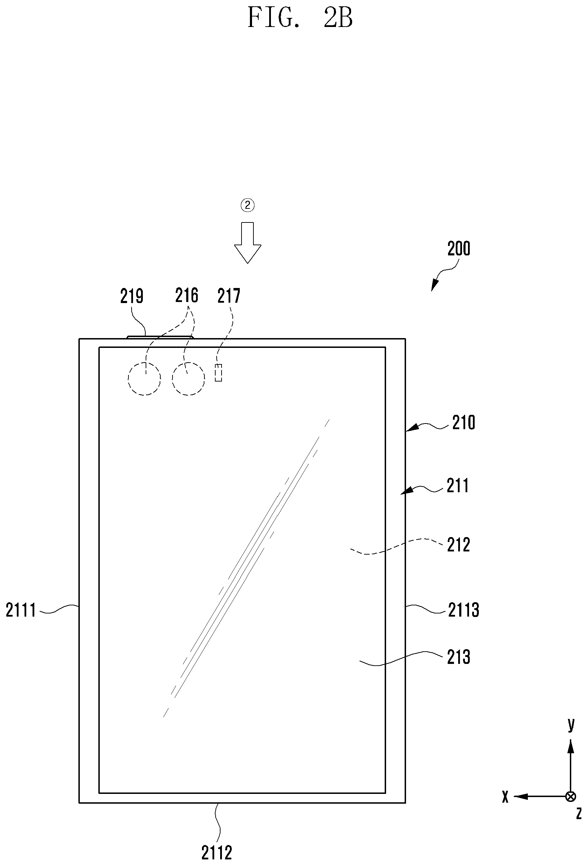

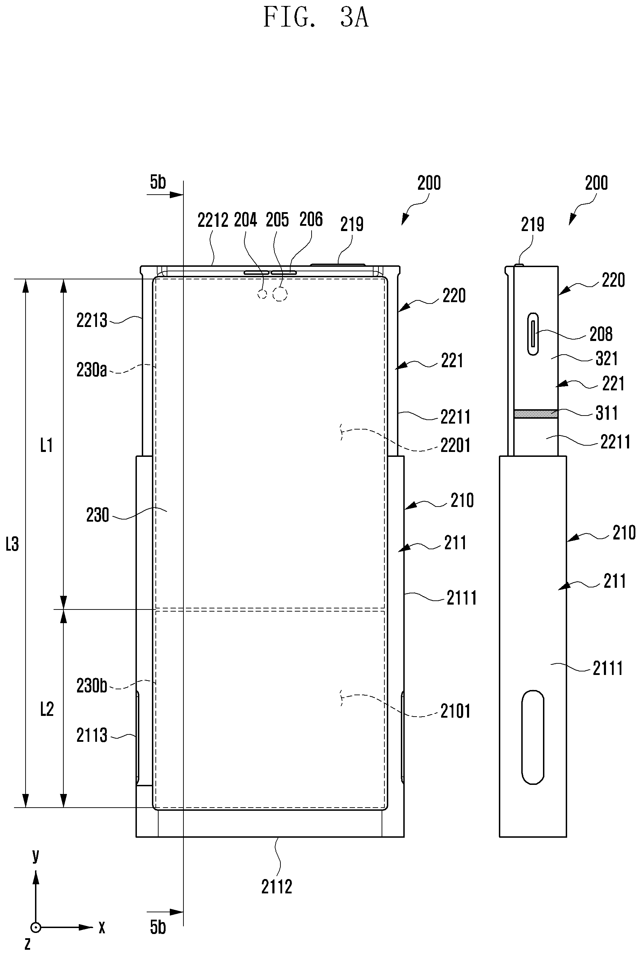

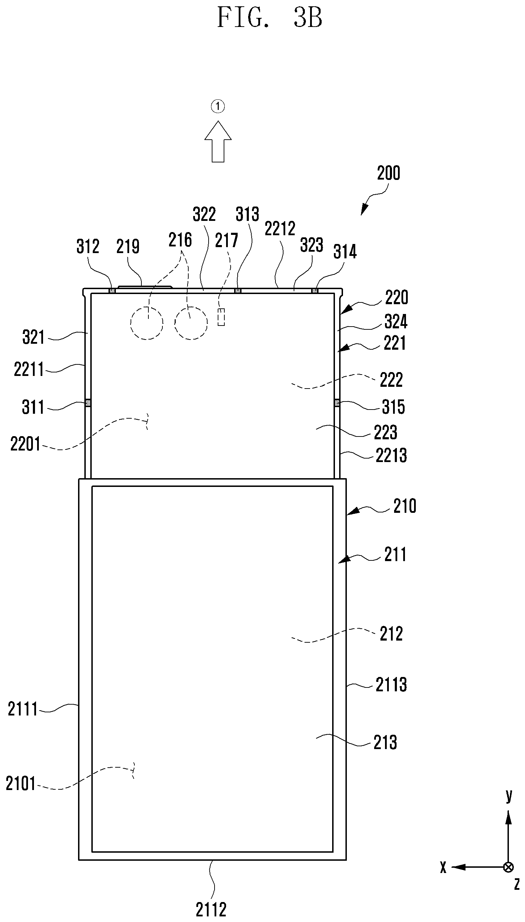

FIGS. 2A and 2B are views illustrating the front and rear surfaces of an electronic device in a slide-in state according to various embodiments of the disclosure. FIGS. 3A and 3B are views illustrating the front and rear surfaces of an electronic device in a slide-out state according to various embodiments of the disclosure.

The electronic device 200 in FIGS. 2A to 3B may be similar to the electronic device 101 in FIG. 1 at least in part or may further include other embodiments of the electronic device.

With reference to FIGS. 2A to 3B, the electronic device 200 may include a first housing 210, a second housing 220 slidably combined with the first housing 210 in a specified direction (e.g., direction ①or direction ②) (e.g., ±y-axis direction), and a rollable display 230 (e.g., flexible display, expandable display, or stretchable display) disposed to be supported through at least a portion of the first and second housings 210 and 220. According to an embodiment, the electronic device 200 may be configured such that the second housing 220 slides out in the first direction (direction ①) or slides in in the second direction (direction ②) opposite to the first direction (direction ①), based on the first housing 210 held by the user. According to an embodiment, for change to the slide-in state, at least a portion of the second housing 220 having a second space 2201 can be accommodated in a first space 2101 of the first housing 220. According to an embodiment, the electronic device 200 may include a support member (e.g., the support member 240 in FIG. 4) (e.g., a bendable member, an articulated hinge module, or a multi-bar assembly), which forms at least partially the same plane as at least a portion of the second housing 220 in the slide-out state and is at least partially accommodated in the first space 2101 of the first housing 210 in the slide-in state. According to an embodiment, in the slide-in state, at least a portion of the rollable display 230 may be disposed to be invisible from the outside by being accommodated in the internal space 2101 of the first housing 210 in a bending (or rolling) manner while being supported by the support member (e.g., the support member 240 in FIG. 4). According to an embodiment, in the slide-out state, at least a portion of the rollable display 230 may be disposed to be visible from the outside while being supported by the support member (e.g., the support member 240 in FIG. 4) that forms at least partially the same plane as the second housing 220.

According to various embodiments, the electronic device 200 may include the first housing 210 including a first lateral member 211 and the second housing 220 including a second lateral member 221. According to an embodiment, the first lateral member 211 may include a right lateral portion 2111 (e.g., a first side surface) having a first length along a first direction (e.g., the y-axis direction), a lower lateral portion 2112 (e.g., a second side surface) extending from the right lateral portion 2111 to have a second length shorter than the first length along a substantially vertical direction (e.g., the x-axis direction), and a left lateral portion 2113 (e.g., a third side surface) extending substantially parallel to the right lateral portion 2111 from the lower lateral portion 2112 and having the first length. According to an embodiment, the first lateral member 211 may be formed of a metallic material (e.g., a conductive material) at least in part. In some embodiment, the first lateral member 211 may be formed of a combination of a metallic material and a non-conductive material (e.g., polymer). According to an embodiment, the first housing 210 may include a first extension member 212 extending from at least a portion of the first lateral member 211 to at least a portion of the first space 2101. According to an embodiment, the first extension member 212 may be formed integrally with the first lateral member 211. In some embodiment, the first extension member 212 may be configured separately from the first lateral member 211 and structurally combined with the first lateral member 211.

According to various embodiments, the second lateral member 221 may include a right lateral portion 2211 (e.g., a fourth side surface) that at least partially corresponds to the right lateral portion 2111 of the first housing 210 and has a third length, an upper lateral portion 2212 (e.g., a fifth side surface) extending from the right lateral portion 2211 in a direction substantially parallel to the lower lateral portion 2112 of the first housing and having a fourth length shorter than the third length, and a left lateral portion 2213 (e.g., sixth side surface) extending from the upper lateral portion 2212 to correspond to the left lateral portion 2113 and having the third length. According to an embodiment, the second lateral member 221 may be formed of a metallic material (e.g., metal) at least in part. In some embodiment, the second lateral member 221 may be formed of a combination of a metallic material and a non-conductive material (e.g., polymer). According to an embodiment, at least a portion of the second lateral member 221 may include a second extension member 222 extending to at least a portion of the second space 2201 of the second housing 220. According to an embodiment, the second extension member 222 may be formed integrally with the second lateral member 221. In some embodiment, the second extension member 222 may be configured separately from the second lateral member 221 and structurally combined with the second lateral member 221. In an embodiment, the electronic device 200 may include a lateral cover 2112a disposed to cover at least a portion of the second lateral portion 2112 of the first housing 210.

According to various embodiments, the right lateral portion 2111 of the first housing 210 and the right lateral portion 2211 of the second housing 220 may be slidably combined with each other. According to an embodiment, the left lateral portion 2113 of the first housing 210 and the left lateral portion 2213 of the second housing 220 may be slidably combined with each other. According to an embodiment, in the slide-in state, the right lateral portion 2211 of the second housing 220 may overlap with the right lateral portion 2111 of the first housing 210, so that it can be disposed to be substantially invisible from the outside. According to an embodiment, in the slide-in state, the left lateral portion 2213 of the second housing 220 may overlap with the left lateral portion 2113 of the first housing 210, so that it can be disposed to be substantially invisible from the outside. In some embodiment, at least a portion of the right and left lateral portions 2211 and 2213 of the second housing 220 may be disposed to be at least partially visible from the outside in the slide-in state. According to an embodiment, in the slide-in state, at least a portion of the second extension member 222 may overlap with the first extension member 212.

According to various embodiments, the first housing 210 may include a first rear cover 213 combined with at least a portion of the first lateral member 211. According to an embodiment, the first rear cover 213 may be disposed to be combined with at least a portion of the first extension member 212. In some embodiment, the first rear cover 213 may be formed integrally with the first lateral member 211. According to an embodiment, the first rear cover 213 may be formed of polymer, coated or colored glass, ceramic, metal (e.g., aluminum, stainless steel (STS), or magnesium), or a combination of at least two of these materials. In some embodiment, the first rear cover 213 may extend to at least a portion of the first lateral member 211. In some embodiment, at least a portion of the first extension member 212 may be replaced with the first rear cover 213.

According to various embodiments, the second housing 220 may include a second rear cover 223 combined with at least a portion of the second lateral member 221. According to an embodiment, the second rear cover 223 may be disposed to be combined with at least a portion of the second extension member 222. In some embodiment, the second rear cover 223 may be formed integrally with the second lateral member 221. According to an embodiment, the second rear cover 223 may be formed of polymer, coated or colored glass, ceramic, metal (e.g., aluminum, stainless steel (STS), or magnesium), or a combination of at least two of these materials. In some embodiment, the second rear cover 223 may extend to at least a portion of the second lateral member 221. In some embodiment, at least a portion of the second extension member 222 may be **replaced** with the second rear cover 223.

According to various embodiments, the electronic device 200 may include the rollable display 230 disposed to be supported by at least a portion of the first and second housings 210 and 220. According to an embodiment, the rollable display 230 may include a first portion 230a (e.g., a flat portion) that is always visible from the outside, and a second portion 230b (e.g., bendable portion) that extends from the first portion 230a and is accommodated in the first space 2101 of the first housing 210 in at least partially bending manner so that at least a portion is invisible from the outside in the slide-in state. According to an embodiment, the first portion 230a may be disposed to be supported by the second housing 220, and the second portion 230b may be disposed to be at least partially supported by the support member (e.g., the support member 240 in FIG. 4). According to an embodiment, in a state that the second housing 220 slides out along the first direction (direction ①), the second portion 230b of the rollable display 230 may be disposed to extend from the first portion 230a while being supported by the support member (e.g., the support member 240 in FIG. 4), form substantially the same plane as the first portion 230a, and be visible from the outside. According to an embodiment, in a state that the second housing 220 slides in along the second direction (direction ②), the second portion 230b of the rollable display 230 may be disposed to be accommodated in the first space 2101 of the first housing 210 and be invisible from the outside. Therefore, in the electronic device 200, as the second housing 220 is moved in a sliding manner along a specified direction (e.g., ±y axis direction) from the first housing 210, the display area of the rollable display 230 may be changed.

According to various embodiments, the length of the rollable display 230 in the first direction (direction ①) may be varied in response to the sliding movement of the second housing 220 with respect to the first housing 210.For example, in the slide-in state, the rollable display 230 may have a first display area (e.g., an area corresponding to the first portion 230a) corresponding to a first length L1. According to an embodiment, in the slide-out state, in response to the sliding movement of the second housing 220 due to an additional move by a second length L2 with respect to the first housing 210, the rollable display 230 may be expanded to have a third display area (e.g., an area including the first portion 230a and the second portion 230b) that is larger than the first display area and corresponds to a third length L3 greater than the first length L1.

According to various embodiments, the electronic device 200 may include at least one of an input device (e.g., a microphone 203-1), a sound output device (e.g., a call receiver 206 or a speaker 207), sensor modules 204 and 217, a camera module (e.g., a first camera module 205 or a second camera module 216), a connector port 208, a key input device 219, or an indicator (not shown). According to an embodiment, the electronic device 200 may include another input device (e.g., a microphone 203) disposed in the first housing 210. In another embodiment, the electronic device 200 may be configured so that at least one of the above-described components is omitted or other components are additionally included. In another embodiment, at least one of the above-described components may be disposed in the first space 2101 of the first housing 210.

According to various embodiments, the input device may havethe microphone 203-1. In some embodiment, the input device (e.g.,the microphone 203-1) may include a plurality of microphones arranged to detect the direction of sound. The sound output device may include, for example, the call receiver 206 and/or the speaker 207. According to an embodiment, the speaker 207 may correspond to the outside through at least one speaker hole formed in the second housing 220 at a position (e.g., the upper lateral portion 2212 of the second housing) always exposed to the outside regardless of the slide-in/slide-out state. According to an embodiment, in the slide-out state, the connector port 208 may correspond to the outside through a connector port hole formed in the second housing 220. In some embodiment, in the slide-in state, the connector port 208 may correspond to the outside through an opening formed in the first housing 210 and formed to correspond to the connector port hole. In some embodiment, the call receiver 206 may include a speaker (e.g., piezo speaker) that operates without a separate speaker hole.

According to various embodiments, the sensor modules 204 and 217 may generate electrical signals or data values corresponding to the internal operating state of the electronic device 200 or the external environmental state. The sensor modules 204 and 217 may include, for example, a first sensor module 204 (e.g., a proximity sensor or an illuminance sensor) disposed on the front of the electronic device 200 and/or a second sensor module 217 (e.g., a heart rate monitoring (HRM) sensor) disposed on the rear of the electronic device 200. According to an embodiment, the first sensor module 204 may be disposed under the rollable display 230 on the front of the electronic device 200. According to an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front of the electronic device 200 and a second camera module 216 disposed on the rear of the electronic device 200. According to an embodiment, the electronic device 200 may include a flash (not shown) located near the second camera module 216. According to an embodiment, the camera modules 205 and 216 may include one or more lenses, an image sensor, and/or an image signal processor. According to an embodiment, the first camera module 205 may be disposed under the rollable display 230 and configured to photograph a subject through a portion of the active area (e.g., display area) of the rollable display 230.

According to various embodiments, the first camera module 205 among the camera modules and some sensor module 204 among the sensor modules 204 and 217 may be disposed to detect the external environment through the rollable display 230. For example, the first camera module 205 or the sensor module 204 may be disposed to be in contact with the external environment through a transparent area or a perforated opening formed in the rollable display 230 in the second space 2201 of the second housing 220. According to an embodiment, the area of the rollable display 230, facing the first camera module 205, is part of the display area that displays contents and may be formed as a transparent area with a specified transmittance. According to an embodiment, the transparent area may be formed to have a transmittance ranging from about 5% to about 20%. The transmission area may include an area overlapping with an effective area (e.g.,a field of view area) of the first camera module 205 through which light for generating an image in the image sensor passes. For example, the transmission area of the rollable display 230 may include an area where pixel density and/or wiring density are lower than the surrounding area. For example, the transparent area may replace the opening described above. For example, the camera modules 205 may include an under display camera (UDC). In some embodiment, the sensor module 204 may be disposed to perform its function without being visually exposed through the rollable display 230 in the internal space of the electronic device 200.

According to various embodiments, the slide-in/slide-out operations of the electronic device 200 may be performed automatically. For example, the slide-in/slide-out operations of the electronic device 200 may be performed through a gearing operation of a driving motor(e.g., the driving motor 260 in FIG. 4) including a pinion gear (e.g., the pinion gear 261 in FIG. 4) disposed in the first space 2101 of the first housing 210, and a rack gear (e.g., the rack gear 2251 in FIG. 4) disposed in the second space 2201 of the second housing 220 and gear-coupled with the pinion gear 261.For example, a processor (e.g., the processor 120 in FIG. 1) of the electronic device 200 may operate the driving motor (e.g., the driving motor 260 in FIG. 4) disposed inside the electronic device 200 when detecting a triggering operation for switching from the slide-in state to the slide-out state or from the slide-out state to the slide-in state. According to an embodiment, the triggering operation may include selecting (e.g., touching) an object displayed on the rollable display 230 or manipulating a physical button (e.g., key button) included in the electronic device 200. In some embodiment, the electronic device 200 may include a manual slide module (e.g., a hinge module using a spring), and the slide-in/slide-out operations may be performed manually through user manipulation.

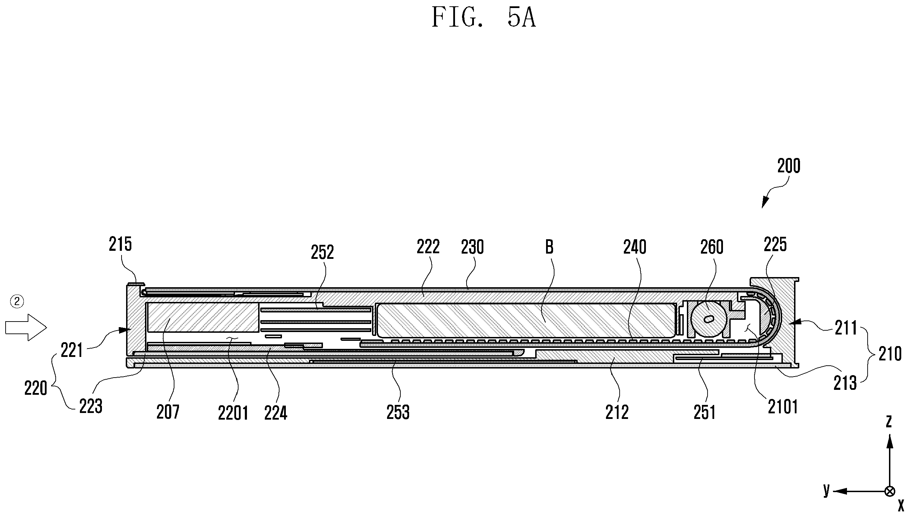

According to various embodiments, the electronic device 200 may include at least one conductive member 321, 322, 323, and/or 324 (e.g., a metallic material or a conductive member) segmented through a plurality of non-conductive portions 311, 312, 313, 314, and 315 (e.g., polymer, non-conductive member or segment portion) in the second lateral member 221. According to an embodiment, the at least one conductive member 321, 322, 323, and/or 324 may be electrically connected to a wireless communication circuit (e.g., the wireless communication module 192 in FIG. 1) disposed on a second substrate (e.g., the second substrate 252 in FIG. 5A) disposed in the second internal space 2201, thereby operating as at least one antenna. According to an embodiment, the wireless communication circuit 192 may be configured to transmit or receive a radio signal in at least one designated frequency band (e.g., about 800 MHz to 6000 MHz) (e.g., legacy band) through the at least one conductive member 321, 322, 323, and/or 324.

According to various embodiments, in the slide-in state, some parts of some conductive members 321 and 324 among the conductive members 321, 322, 323, and 324 may be accommodated into the first space 2101 and overlapped and/or contacted with or hidden by the first lateral member 211 of the first housing 210 formed of a metallic material so as to be invisible from the outside. In this case, the conductive members 321 and 324 may behidden by the first housing 210, so that the antenna may have reduced radiation performance.

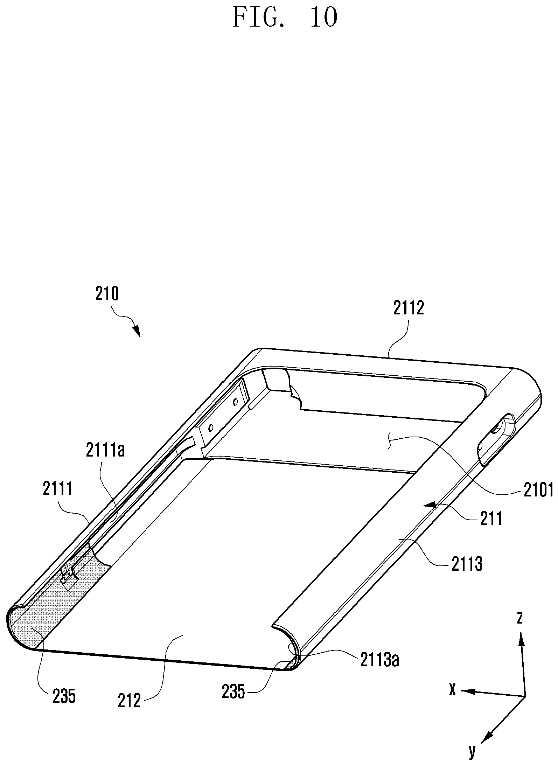

According to an embodiment of the disclosure, the electronic device 200 may include a first dielectric 215 disposed at least partially between the at least one conductive member 321 and/or 324 and the first housing 210. According to an embodiment, the first dielectric 215 may be disposed in the form of a cover via at least some areas of the second housing 210 (e.g., some areas of the second lateral member 221), thereby physically and/or electromagnetically separating the at least one conductive member 321 and/or 324 from the corresponding portion of the first housing 210 in the slide-in state and helping to reduce the degree of degradation in radiation performance of the antenna.In some embodiment, the first dielectric 215 may be formed integrally with the non-conductive material of the second lateral member 221 through an injection process. In some embodiment, the first dielectric 215 may be replaced with a second dielectric(the second dielectric 235 in FIG. 10) disposed on the inner surface of the first housing 210 in the area overlapping with the at least one conductive member 321 and/or 324 in the slide-in state. In some embodiment, the first dielectric 215 and the second dielectric 235 may be disposed on the inner surfaces of both the second housing 220 and the first housing 210 in the area overlapping with the at least one conductive member 321 and/or 324.

In some embodiment, the electronic device 200 may further include at least one antenna module (e.g., 5G antenna module or antenna structure) disposed in the internal space (e.g., the first space 2101 or the second space 2201) and configured to transmit or receive a radio signal in a frequency band ranging from about 3 GHz to 100 GHz through another wireless communication circuit (e.g., the wireless communication circuit 192 in FIG. 1).

Hereinafter, detailed description will be given below.

FIG. 4 is an exploded perspective view of an electronic device according to various embodiments of the disclosure.

In describing the electronic device 200 of FIG. 4, components that are substantially the same as those of the electronic device 200 of FIGS. 2A to 3B are given the same reference numerals, and detailed descriptions thereof may be omitted.

With reference to FIG. 4, the electronic device 200 may include the first housing 210 having the first space 2101, the second housing 220 slidably combined with the first housing 210 and having the second space 2201, the support member 240 movably disposed in at least partially bending manner in the first space 2101, the rollable display 230 disposed to be supported by at least a portion of the support member 240 and the second housing 220, a driving module that drives the second housing 220 in the slide-in direction (e.g., the negative y-axis direction) and/or the slide-out direction (e.g., the positive y-axis direction) with respect to the first housing 210. According to an embodiment, the first housing 210 may include the first lateral member 211 and the first rear cover 213 combined with at least a portion of the first lateral member 211 (e.g., at least a portion of the first extension member 212). According to an embodiment, the second housing 220 may include the second lateral member 221 and the second rear cover 223 combined with at least a portion of the second lateral member 221 (e.g., at least a portion of the second extension member 222). According to an embodiment, the driving module may include the driving motor 260 disposed in the second space 2201 and including the pinion gear 261, and the rack gear 2251disposed in the first space 2101 to be gear-coupled with the pinion gear 261. According to an embodiment, the driving module may further include a deceleration module including a gear assembly combined with the driving motor 260 and arranged to reduce the rotational speed and increase the driving force. According to an embodiment, the driving motor 260 may be disposed to be supported through at least a portion of the second extension member 222 in the second space 2201 of the second housing 220. According to an embodiment, the driving motor 260 may be fixed to an end (e.g., edge) of the second extension member 222 in the slide-in direction (e.g., the negative y-axis direction) in the second space 2201.

According to various embodiments, the electronic device 200 may include a first substrate 251 disposed in the first space 2101 of the first housing 210. According to an embodiment, the electronic device 200 may include a plurality of electronic components arranged in the second space 2201. According to an embodiment, the plurality of electronic components may include at least one of a second substrate 252, a battery B disposed around the second substrate 252, a camera module (e.g., the first camera module 205 in FIG. 2A and/or the second camera module 216 in FIG. 3B), a socket module (e.g., the socket module 218 in FIG. 2A) (e.g., a SIM tray), a speaker (e.g., the speaker 207 and/or the receiver 206 in FIG. 2A), a key button (e.g., the key button 219 in FIG. 3A) (e.g., a fingerprint recognition enabled key button), at least one sensor module (e.g., the sensor module 204 in FIG. 3A and/or the sensor module 217in FIG. 3B), and a connector port (e.g., the connector port 208 in FIG. 3A). According to an embodiment, the plurality of electronic components are disposed around the second substrate 252 in the second space 2201 of the second housing 220 together with the driving motor 260, so that efficient electrical connection may be possible.

According to various embodiments, the electronic device 200 may include a rear bracket 224 disposed to cover at least some of the plurality of electronic components disposed between the second extension member 222 and the second rear cover 223 in the second housing 220. According to an embodiment, the rear bracket 224 may be structurally combined with at least a portion of the second extension member 222. In some embodiment, the rear bracket 224 may be omitted. According to an embodiment, the rear bracket 224 may be disposed to cover the plurality of electronic components and support the second rear cover 223.

According to various embodiments, the electronic device 200 may include a plate-type support bracket 225 (e.g., DSB, display support bar) disposed in the first space 2101 of the first housing 210. According to an embodiment, the support bracket 225 may include a rack gear 2251 disposed to be gear-coupled with the pinion gear 261 of the driving motor 260. According to an embodiment, the rack gear 2251 may be fixed to the support bracket 225 or may be formed integrally with the support bracket 225. According to an embodiment, the support bracket 225 may include a support portion 2252 for guiding at least a portion of the rollable display 230 to the first space 2101 and inducing a smooth operation of the rollable display 230. According to an embodiment, the electronic device 200 may include a pair of guide rails 226 disposed on both sides of the support bracket 225 and guiding both ends of the support member 240 in the sliding direction. According to an embodiment, the electronic device 200 may include a lateral cover 2112a disposed to cover at least a portion of the second side surface 2112 of the first housing 210.

According to various embodiments, the first housing 210 may have an opening 212a (e.g., a through hole) in the first extension member 212, which is disposed in an area corresponding to the camera module 216 and/or the sensor module 217 disposed in the second housing 220 when the electronic device 200 is in the slide-in state. According to an embodiment, the camera module 216 and/or the sensor module 217 may detect the external environment through the opening 212a formed in the first housing 220 when the electronic device 200 is in the slide-in state. In this case, at least an area of the first rear cover 213 corresponding to the camera module 216 and/or the sensor module 217 may be processed to be transparent.

According to various embodiments, the electronic device 200 may include the first substrate 251 and an antenna member 253 disposed between the first extension member 212 and the first rear cover 213 in the first housing 210. According to an embodiment, the first substrate 251 and the antenna member 253 may be disposed on at least a portion of the first extension member 212. According to an embodiment, the first substrate 251 and the antenna member 253 may be electrically connected to the second substrate 252 through at least one electrical connection member (e.g., a flexible printed circuit board (FPCB) or a flexible RF cable (FRC)). According to an embodiment, the antenna member 253 may include a multi-function coil or multi-function core (MFC) antenna for performing a wireless charging function, a neat field communication (NFC) function, and/or an electronic payment function. In some embodiment, the antenna member 253 may be electrically connected to the first substrate 251 and thus be electrically connected to the second substrate 252 through the first substrate 251.

The electronic device 200 may includes the first dielectric 215 disposed in the second housing 220. According to an embodiment, the first dielectric 215 may be disposed in the form of a cover to cover at least a portion of the second lateral member 221. Therefore, at least some conductive members (e.g., the conductive members 321 and 324 in FIG. 3B) used as antennas in the second lateral member 221 are prevented from being physically or electromagnetically close to and/or in contact with the first lateral members 211 formed of a metallic material in the slide-in state, so that it can help reduce the degree of degradation in the radiation performance of the antenna.

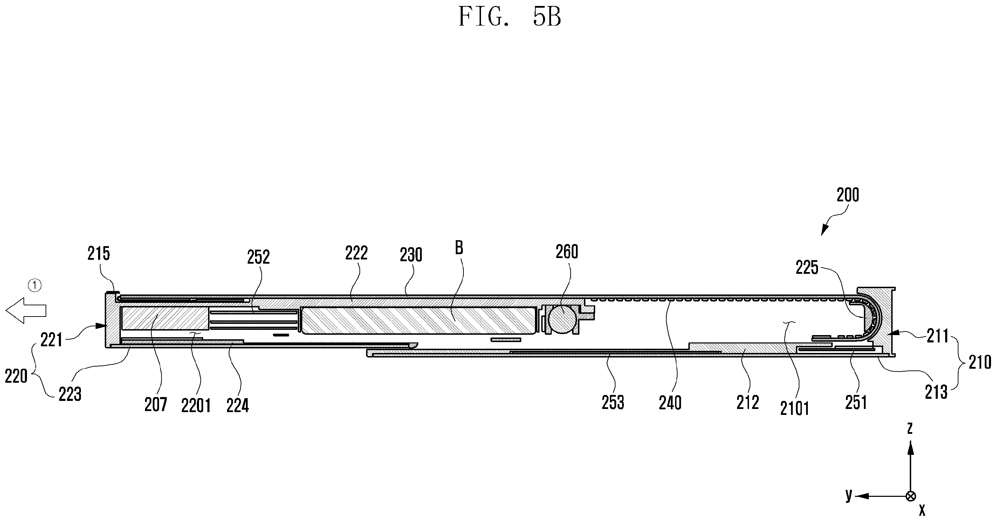

FIG. 5A is a cross-sectional view of an electronic device taken along line 5a-5a of FIG. 2A according to various embodiments of the disclosure.FIG. 5B is a cross-sectional view of an electronic device taken along line 5b-5b of FIG. 3A according to various embodiments of the disclosure.

In describing the electronic device of FIGS. 5A and 5B, components that are substantially the same as those of the electronic device of FIG. 4 are given the same reference numerals, and detailed description thereof may be omitted.

With reference to FIGS. 5A and 5B, the electronic device 200 may include the first housing 210 having the first space 2101, the second housing 220 having the second space 2201, the support member 240 connected to the first housing 210 and at least partially accommodated in the first space 2101 in the slide-in state, the rollable display 230 disposed to be supported by at least a portion of the support member 240 and at least a portion of the second housing 220, and the driving motor 260 including a pinion gear (e.g., the pinion gear 261 in FIG. 4) disposed in the second space 2201 and gear-coupled to a rack gear (e.g., the rack gear 2251 in FIG. 4) in the first space 2101. According to an embodiment, the driving motor 260 may automatically move the second housing 220 in the slide-in direction (direction②) or the slide-out direction (direction①) with respect to the first housing 210.

According to various embodiments, in the slide-in state, at least a portion of the second housing 220 may be accommodated in the first space 2101 of the first housing 210. According to an embodiment, the second extension member 222 may be guided by the support bracket 225 slidably combined and disposed in the first space 2101. In this case, at least a portion of the rollable display 230 is accommodated in the first space 2101 together with the support member 240, so that it can be arranged to be invisible from the outside. In this case, the first display area of the rollable display 230 may be exposed to the outside.

According to various embodiments, at least a portion of the second housing 220 may be exposed to the outside of the first housing 210 at least in part through the driving of the driving motor 260 along the first direction (direction ①) totransition to the slide-out state. According to an embodiment, in the slide-out state, the rollable display 230 may move together with the support member 240 while being supported by the support bracket 225,so that its slide-in portion in the first space 2101 may be at least partially exposed to the outside. In this case, the rollable display 230 may have an expanded second display area larger than the first display area, exposed to the outside.

According to various embodiments, the driving motor 260 and electronic components (e.g., the second substrate 252 and the battery B) disposed in the second housing 220 are moved together in response to the slide-in/slide-out operations of the second housing 220. Thus, compared to the arrangement structure in which the corresponding components are arranged in the first housing 210 and connected to the second substrate 252 through electrical connection members, the electrical connection members are minimized. This may improve the operational reliability of the electronic device 200 and help to design the efficient arrangement of the electronic components.

The first dielectric 215 according to the embodiment of the disclosure allows at least some conductive members (e.g., the conductive members 321 and 324 in **FIG. 3B****)** used as antennas in the second lateral member 221 to be prevented from being physically or electromagnetically close to and/or in contact with the first lateral members 211 at least partially formed of a metallic material in the slide-in state, so that it can help reduce the degree of degradation in the radiation performance of the antenna.

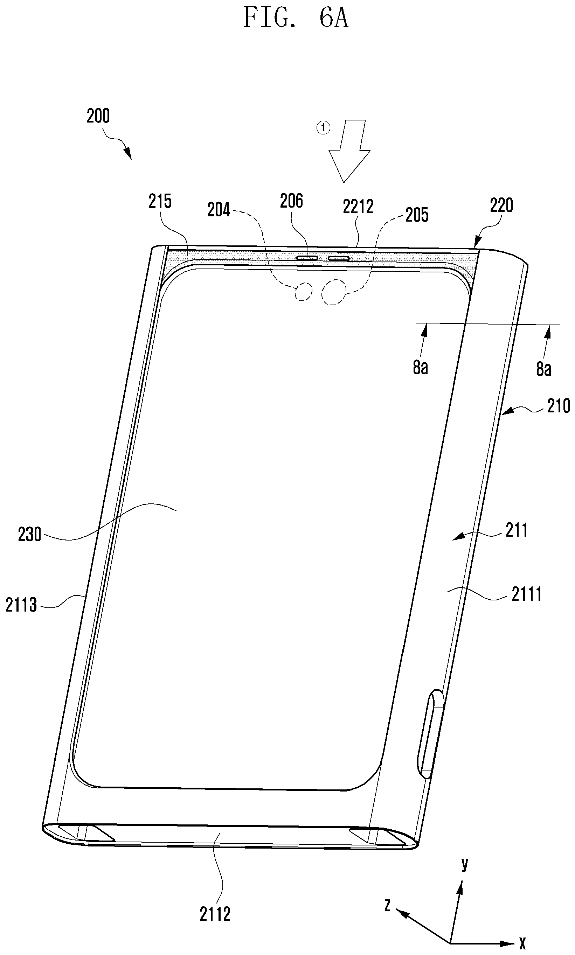

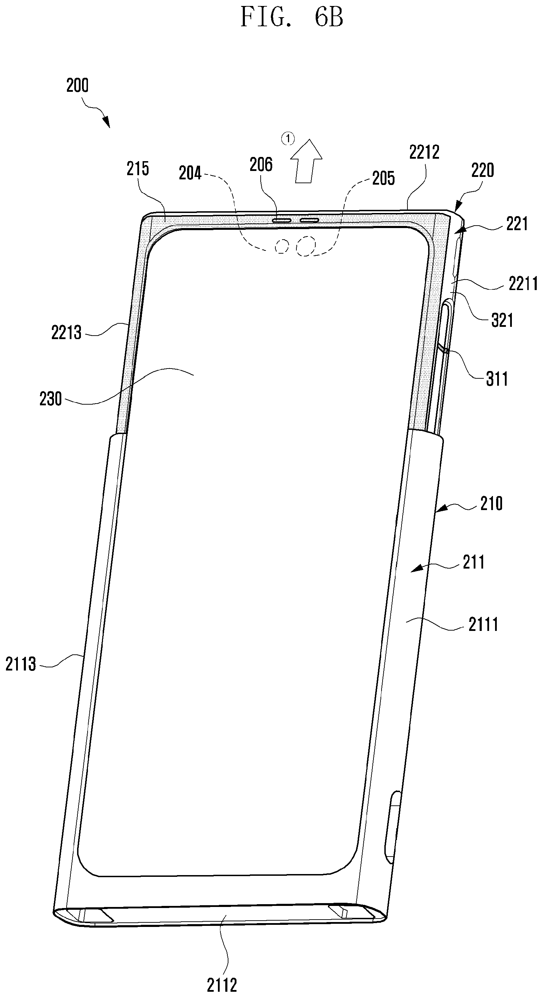

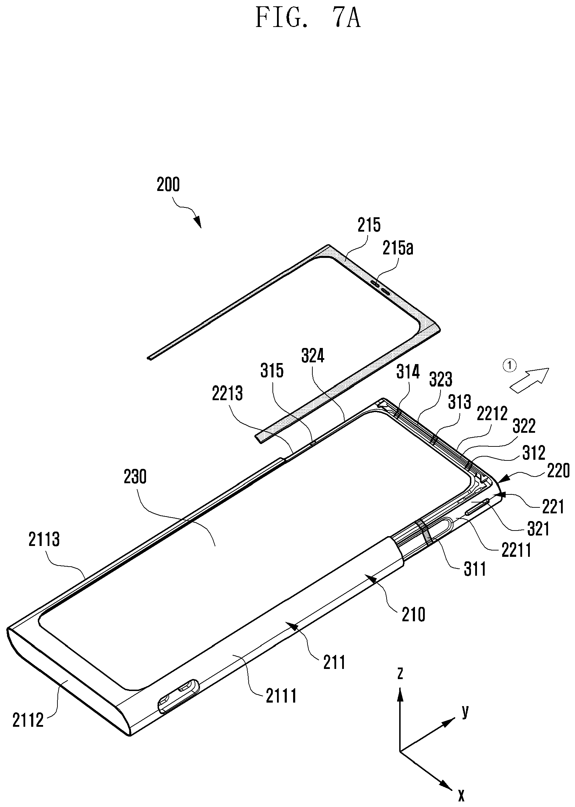

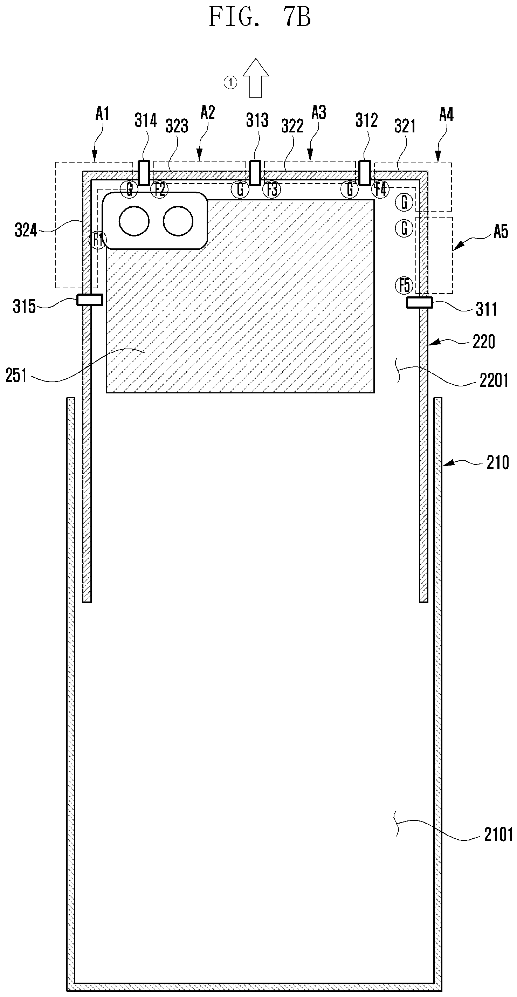

FIGS. 6A and 6B are perspective views of an electronic device in slide-in/slide-out states according to various embodiments of the disclosure.FIG. 7A is a perspective view of an electronic device including a dielectric cover according to various embodiments of the disclosure.FIG. 7B is a view of an electronic device schematically showing an arrangement structure of an antenna disposed through conductive members of a first lateral member according to various embodiments of the disclosure.

In describing the electronic device 200 of FIGS. 6A to 7B, components that are substantially the same as those of the electronic device 200 of FIG. 4 are given the same reference numerals, and detailed description thereof may be omitted.

With reference to FIGS. 6A and 6B, the electronic device 200 may include the first housing 210 having the first space 2101, the second housing 220 slidably combined with the first housing 210, and the rollable display 230 disposed to be supported by at least a portion of the first and second housings 210 and 220. According to an embodiment, the second housing 220 may be disposed to slide out along the first direction (direction ①) (e.g., the positive y-axis direction) or slide in along the second direction (e.g., the negative y-axis direction) with respect to the first housing 210.

According to various embodiments, in the slide-in state of the electronic device 200, at least a portion of the second housing 220 slides in the first space 2101 of the first housing 210 and thus is disposed to be invisible from the outside. For example, the right lateral portion 2211 and the left lateral portion 2213 of the second housing 220 can be accommodated in the internal space 2101 of the first housing 220 and thus arranged so as not to be visible from the outside.

According to various embodiments, the electronic device 200 may include at least one antenna A1, A2, A3, A4, and/or A5 (e.g., bezel antenna) using the conductive member disposed in the second lateral member 221 of the second housing 220. According to an embodiment, the at least one antenna A1, A2, A3, A4, and/or A5 may include the plurality of conductive members 321, 322, 323, and 324 segmented through the plurality of non-conductive portions 311, 312, 313, 314, and 315 disposed in the second lateral member 221. According to an embodiment, the plurality of conductive members 321, 322, 323, and 324 may beelectrically connected to the wireless communication circuit (e.g., the wireless communication module 192 in FIG. 1) disposed on the second substrate 252 in the internal space 2201 of the second housing 220, thereby operating as the antennas A1, A2, A3, A4, and A5 configured to transmit or receive radio signals in at least one designated frequency band.

According to various embodiments, the electronic device 200 may include a first conductive member 321 segmented through a first non-conductive portion 311 disposed in the right lateral portion 2211 of the second housing 220 and a second non-conductive portion 312 disposed in the upper lateral portion 2212 of the second housing 220. According to an embodiment, the electronic device 200 may include a second conductive member 322 segmented through the second non-conductive portion 312 and a third non-conductive portion 313 spaced apart from the second non-conductive portion 312 in the upper lateral portion 2212. According to an embodiment, the electronic device 200 may include a third conductive member 323 segmented through the third non-conductive portion 313 and a fourth non-conductive portion 314 spaced apart from the third non-conductive portion 313 in the upper lateral portion 2212. According to an embodiment, the electronic device 200 may include a fourth conductive member 324 segmented through the fourth non-conductive portion 314 and a fifth non-conductive portion 315 spaced apart from the fourth non-conductive portion 314 in the left lateral portion 2213 of the second housing 220.

According to various embodiments, the fourth conductive member 324 may be electrically connected to the wireless communication circuit 192 through a first power feeding unitF1, thereby operating as a first antenna A1 in at least one first frequency band. According to an embodiment, the third conductive member 323 may be electrically connected to the wireless communication circuit 192 through a second power feeding unit F2, thereby operating as a second antenna A2 in at least one second frequency band. According to an embodiment, the second conductive member 322 may be electrically connected to the wireless communication circuit 192 through a third power feeding unit F3, thereby operating as a third antenna A3 in at least one third frequency band. According to an embodiment, the first conductive member 321 may be electrically connected to the wireless communication circuit 192 through a fourth power feeding unit F4 and a fifth power feeding unit F5, thereby operating as a fourth antenna A4 and a fifth antenna A5 in at least one fourth frequency band and at least one fifth frequency band. For example, the at least one first frequency band to the at least one fifth frequency band may include at least one frequency band from among a low band of about 600 MHz to 960 MHz, a mid band of about 1700 MHz to 2200 MHz, a high band of about 2300 MHz to 2800 MHz, a high frequency band of or about 3 GHz to 300 GHz (e.g., 5G (NR)) (e.g., UHB/FR1, about 3.2 GHz to 4.5 GHz), Bluetooth (BT), global positioning system (GPS), or wireless fidelity (WIFI).

According to various embodiments, a portion of the first conductive member 321 disposed on the right lateral portion 2211 of the second housing 220 and a portion of the fourth conductive member 324 disposed on the left lateral portion 2213 of the second housing 220 may be hidden to be invisible from the outside by being accommodated in the first space 2101 of the first housing 210 in the slide-in state. In this case of transitioning from the slide-out state to the slide-in state, the first antenna A1 and the fourth and fifth antennas A4 and A5 operating through the fourth conductive member 324 and the first conductive member 321, respectively, come into contact with and/or come close to the first housing 210 formed of a metallic material, so that their radiation performance may be reduced.

In order to reduce the degree of degradation in radiation performance, the electronic device 200 includes the first dielectric 215 disposed between the first housing 210 and the second housing 220. According to an embodiment, the first dielectric 215 may be disposed along the edge of the second housing 220. For example, the first dielectric 215 may be a cover type and be disposed to extend from at least a portion of the front surface of the second housing 220 to at least a portion of the second lateral member 221. In some embodiment, when the first dielectric 215 is disposed along the edge of the second housing 220, a through hole 215a may be disposed in an area corresponding to the speaker (e.g., the speaker 206 in FIG. 3A). According to an embodiment, when the first and second housings 210 and 220 transition from the slide-out state to the slide-in state or transition from the slide-in state to the slide-out state, they can maintain a state of being spaced apart from each other at a certain intervalthrough the first dielectric 215, and the first and fourth conductive members 321 and 324 can beprevented from coming close to or contacting the right and left lateral portions2111 and 2113 of the first housing 210. This helps to reduce the degree of degradation in radiation performance of the antennas A1, A4, and A5. According to an embodiment, the first dielectric 215 may be formed of a dielectric material having a low dielectric constant (e.g., a dielectric constant in the range of about 10 to 20), thus helping to reduce the degree of degradation in the radiation performance of the antennas A1, A4 and A5 due to the first housing 210 formed of a metallic material. According to an embodiment, the first dielectric 215 may be formed to have a thickness and length sufficient to space the conductive members 321 and 324 from the first housing 210 during the slide-in state. The first dielectric 215, disposed in the second housing 220, may also be used as a protective member (e.g., a protective cover or a protective frame) formed in a shape that covers at least a portion of the edge of the rollable display 230. In this case, the first dielectric 215 is arranged to overlap with at least the edge of the rollable display 230 when the rollable display 230 is viewed from above. In some embodiment, when the rollable display 230 is viewed from above, at least a portion of the first dielectric 215 may be disposed to overlap with a black matrix (BM) area (e.g., an inactive area) arranged at the edge of the rollable display 230.

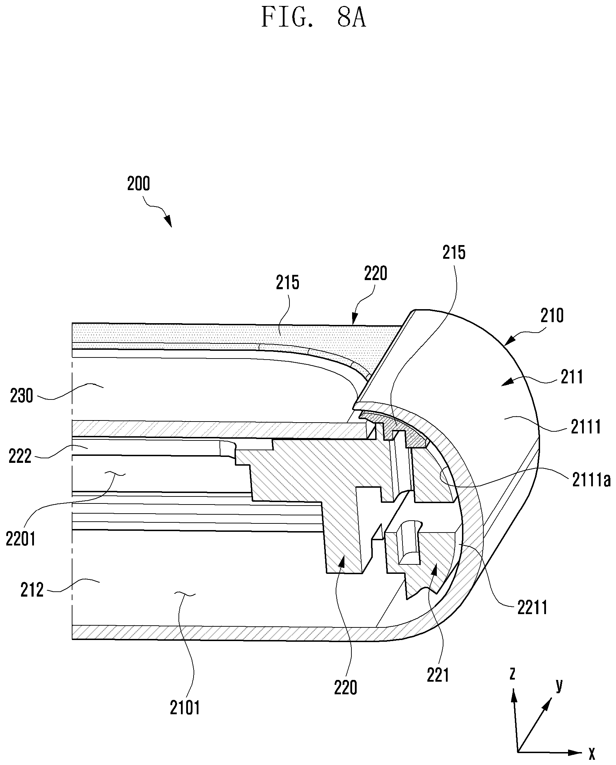

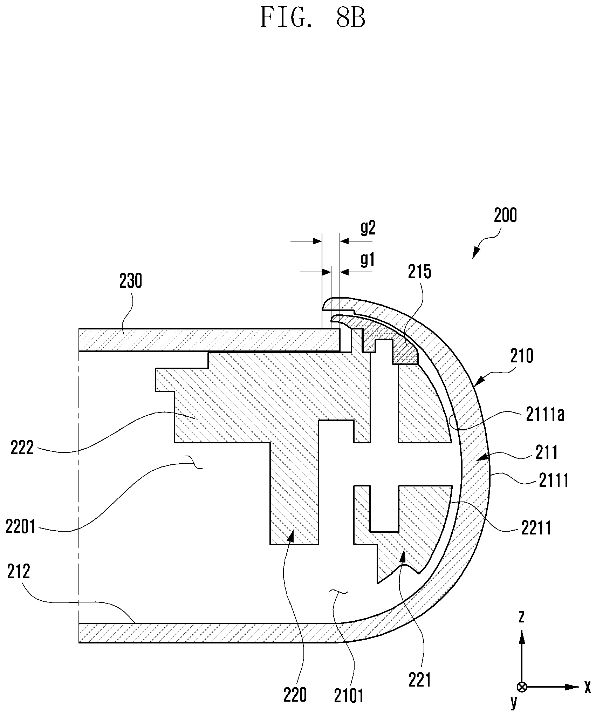

FIGS. 8A and 8B are views illustrating partial cross-sections of an electronic device taken along line 8a-8a of FIG. 6A according to various embodiments of the disclosure.

With reference to FIGS. 8A and 8B, the electronic device 200 may include the first housing 210 having the first space 2101, the second housing 220 slidably combined with the first housing 210, and the rollable display 230 disposed to be supported by at least a portion of the first and second housings 210 and 220. According to an embodiment, the second housing 220 may be disposed to slide out along the first direction (e.g., the positive y-axis direction) or slide in along the second direction (e.g., the negative y-axis direction) with respect to the first housing 210.

According to various embodiments, the electronic device 200 may include the first dielectric 215 disposed between the first lateral member 211 of the first housing 210 and the second lateral member 221 of the second housing 220. According to an embodiment, the first dielectric 215 may be disposed between the right lateral portion 2211 of the second housing 220 and the right lateral portion 2211 of the first housing 210 and between the left lateral portion 2213 of the second housing 220 and the left lateral portion 2113 of the first housing 210. According to an embodiment, the first dielectric 215 may be formed integrally, or disposed between the right lateral portion 2211 of the second housing 220 and the right lateral portion 2211 of the first housing 210 and between the left lateral portion 2213 of the second housing 220 and the left lateral portion 2113 of the first housing 210, respectively. According to anembodiment, the first dielectric 215 may prevent the first housing 210 and the second housing 220 from contacting or coming close to each other during the slide-in/slide-out operations of the electronic device 200. For example, the right lateral portion 2211 of the second housing 220 may be spaced apart from the corresponding inner surface 2111a of the right lateral portion 2111 of the first housing 210 through the first dielectric 215. Although not shown, the left lateral portion (e.g., the left lateral portion 2213 in FIG. 7A) of the second housing 220 may also be spaced apart from the corresponding inner surface of the left lateral portion (e.g., the left lateral portion 2113 in FIG. 7A) of the first housing 210 through the first dielectric 215. Therefore, the first dielectric 215 can help to reduce the degree of degradation in the radiation performance of an antenna that operates through a conductive member (e.g., the first conductive member 321 and the fourth conductive member 324 in FIG. 7A) disposed in at least a portion of the second housing 220.

According to various embodiments, at least a portion of the first dielectric 215 may be disposed to cover the edge of the rollable display 230 supported by the second housing 220. For example, when the rollable display 230 is viewed from above, at least a portion of the first dielectric 215 may be disposed to have a first overlap amount d1 with the rollable display 230. According to an embodiment, the first dielectric 215 may cover the edge of the rollable display 230 in a manner of contacting or being close to the rollable display 230.According to an embodiment, at least a portion of the first housing 210 may be disposed to have a second overlap amount d2 with the rollable display 230 when the rollable display 230 is viewed from above. According to an embodiment, in the slide-in state, the first dielectric 215 may be disposed between the rollable display 230 and the first housing 210. According to an embodiment, the second overlap amount d2 may be set to be greater than the first overlap amount d1 so that at least a portion of the first housing 210 covers the first dielectric 215 in the slide-in state. In some embodiment, the second overlap amount d2 may be set to be smaller than the first overlap amount d1 so that at least a portion of the first dielectric 215 is exposed to the outside in the slide-in state.

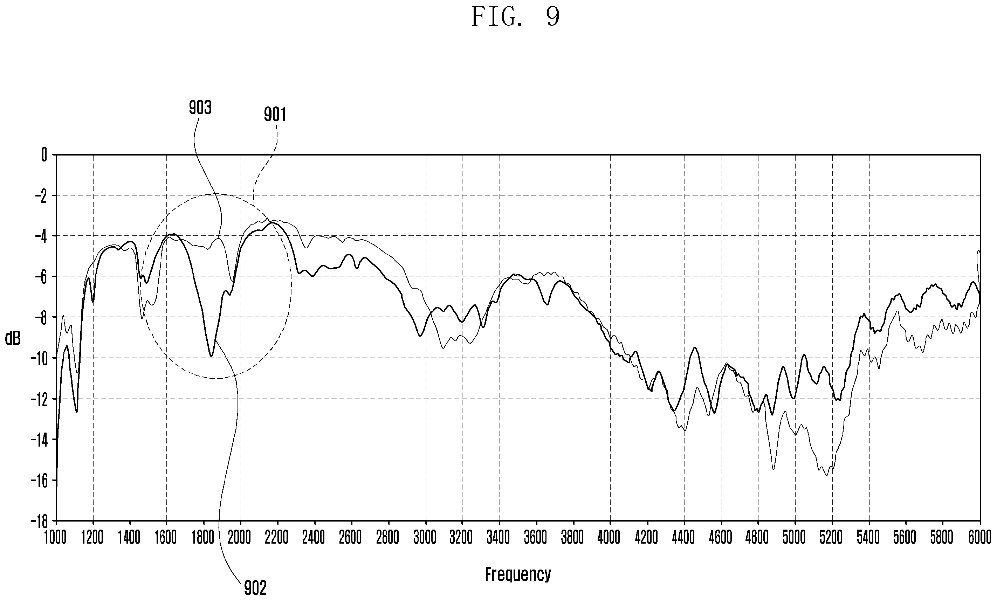

FIG. 9 is a graph comparing the radiation performance of antennas with and without a dielectric cover according to various embodiments of the disclosure.

With reference to FIG. 9, it can be seen that, in a designated frequency band (e.g., about 1800 MHz band) (denoted byregion 901), the antenna radiation performance (denoted by graph 903) when the first dielectric 215 is disposed between the first and second housings 210 and 220 is better than the antenna radiation performance (denoted by graph 902) when the first dielectric 215 does not exist. This may mean that when the first and second housings 210 and 220 are separated through the first dielectric 215 in the slide-in state, the degree of degradation in radiation performance of the antenna is reduced.

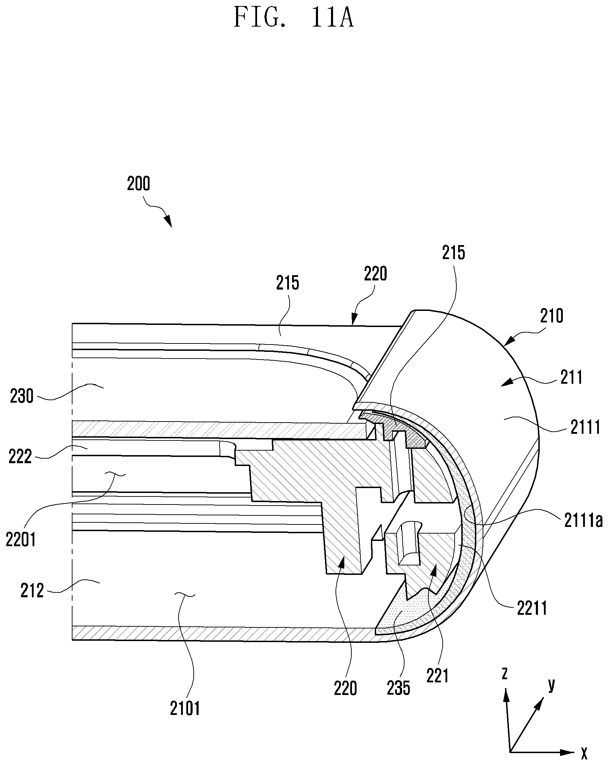

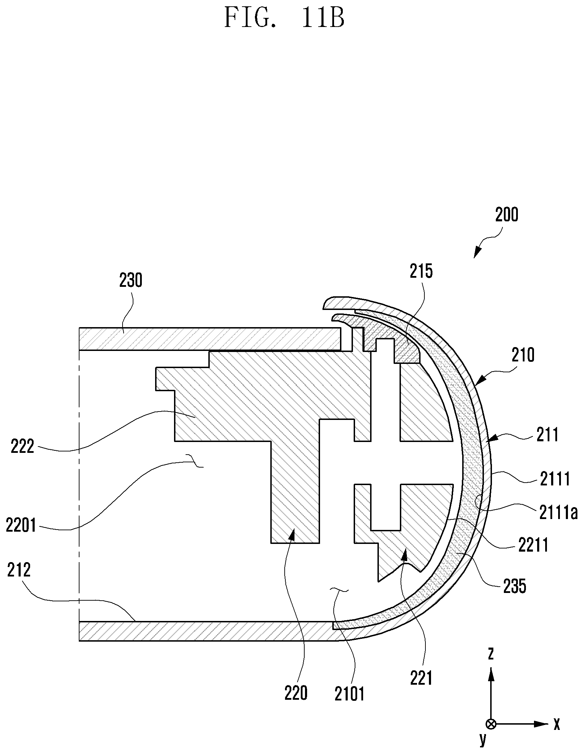

FIG. 10 is a perspective view of a first housing according to various embodiments of the disclosure. FIGS. 11A and 11B are partial cross-sectional views of an electronic device according to various embodiments of the disclosure.

In describing the electronic device 200 of FIGS. 10 to 11B, components that are substantially the same as those of the electronic device 200 of FIGS. 8A and 8B are assigned the same reference numerals, and detailed description thereof may be omitted.

With reference to FIGS. 10 to 11B, the electronic device 200 may include the first dielectric 215 disposed on the outer surface of the second housing 220,and a second dielectric 235 disposed on the inner surfaces 2111a and 2113a of the first housing 210. According to an embodiment, the second dielectric 235 may be disposed on the inner surface 2111a of the right lateral portion 2111 and/or the inner surface 2113a of the left lateral portion 2113 in the internal space 2101 of the first housing 210. According to an embodiment, the second dielectric 235 may be separately fixed to the inner surface of the first housing 210. In some embodiment, the second dielectric 235 may be formed integrally with a non-conductive member formed as at least a portion of the first lateral member 211 of the first housing 210 through an injection process.

According to various embodiments, in the slide-in state, the conductive members (e.g., the conductive members 321 and 324 in FIG. 7B) of the second housing 220, used as antennas (e.g., the first antenna A1, the fourth antenna A4, and the fifth antenna A5 in FIG. 7B), maintain a state of being spaced at a certain distance from the first housing 210 formed of a metallic material through the first dielectric 215 and the second dielectric 235, so that it can help to reduce the degree of degradation in the antenna's radiation performance.

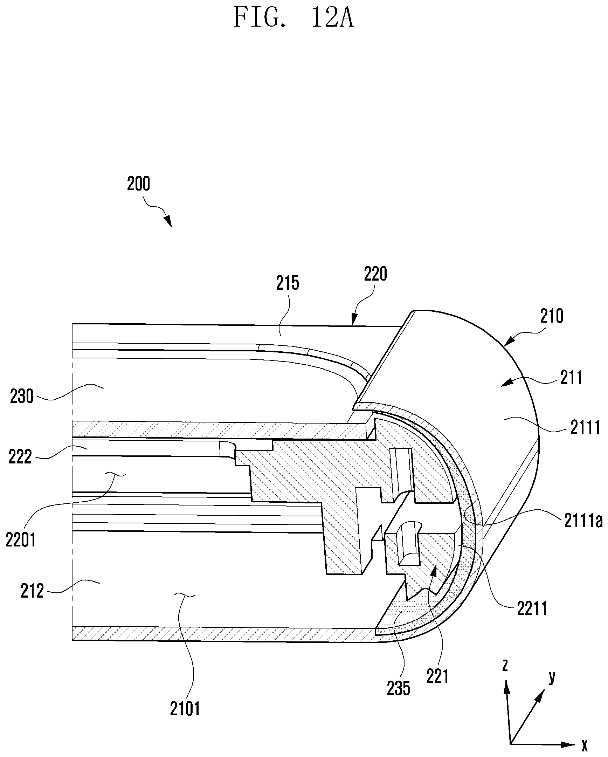

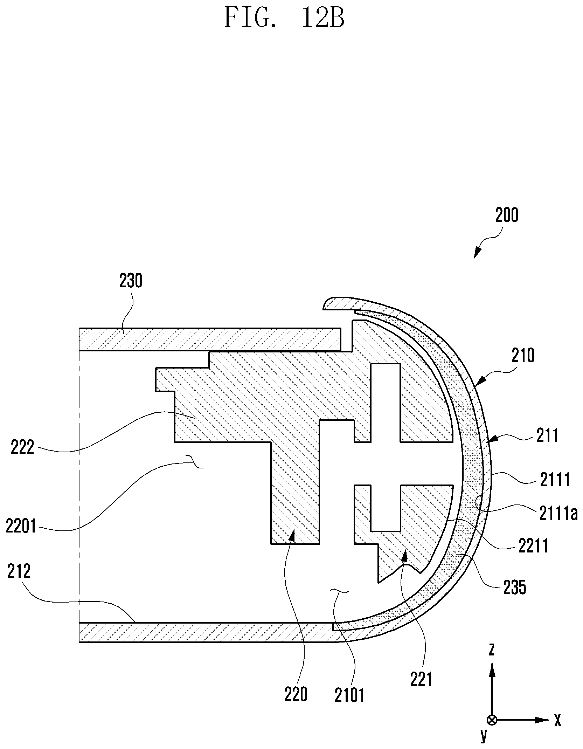

FIGS. 12A and 12B are partial cross-sectional views of an electronic device according to various embodiments of the disclosure.

In describing the electronic device 200 of FIGS. 12A and 12B, components that are substantially the same as those of the electronic device 200 of FIGS. 8A and 8B are assigned the same reference numerals, and detailed description thereof may be omitted.

With reference to FIGS. 12A and 12B, the electronic device 200 may include the second dielectric 235 disposed on the inner surface of the first housing 210. According to an embodiment, the second dielectric 235 may be disposed on the inner surface 2111a of the right lateral portion 2111 and/or the inner surface 2113a of the left lateral portion 2113 in the internal space 2101 of the first housing 210. According to an embodiment, the second dielectric 235 may be separately fixed to the inner surface of the first housing 210. In some embodiment, the second dielectric 235 may be formed integrally with a non-conductive member formed as at least a portion of the first lateral member 211 of the first housing 210 through an injection process.

According to various embodiments, in the slide-in state, the second dielectric 235 maintains the conductive members (e.g., the conductive members 321 and 324 in FIG. 7B) of the second housing 220, used as antennas (e.g., the first antenna A1, the fourth antenna A4, and the fifth antenna A5 in FIG. 7B), in a state of being spaced apart from the first housing 210 formed of a metallic material, so that it can help to reduce the degree of degradation in the antenna's radiation performance.

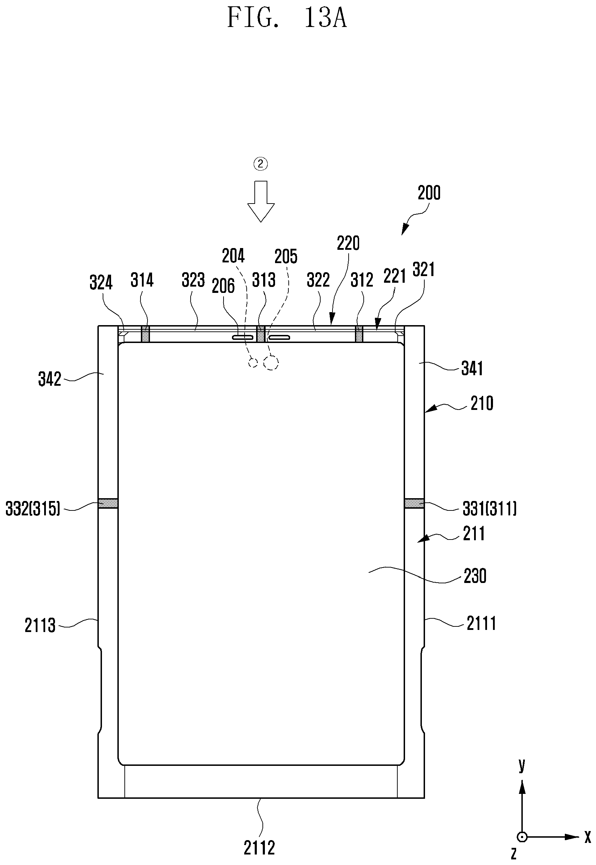

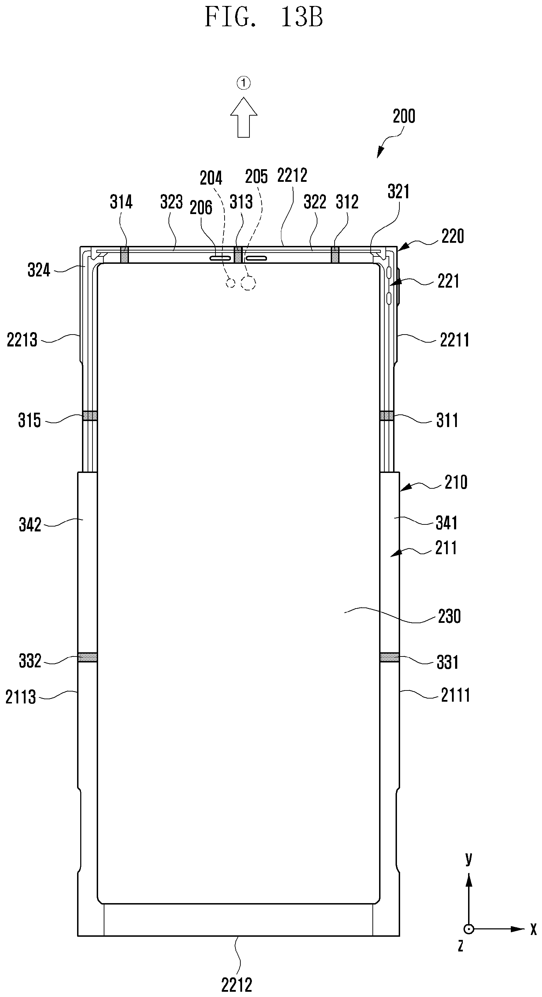

**FIGS.** 13A and 13B are views of an electronic device in slide-in/slide-out states according to various embodiments of the disclosure.

In describing the electronic device 200 of FIGS. 13A and 13B, components that are substantially the same as those of the electronic device 200 of FIG. 7A are assigned the same reference numerals, and detailed description thereof may be omitted.

With reference to FIGS. 13A and 13B, the electronic device 200 may include the first housing 210 having the first space 2101, the second housing 220 slidably combined with the first housing 210, and the rollable display 230 disposed to be supported by at least a portion of the first and second housings 210 and 220. According to an embodiment, the second housing 220 may be disposed to slide out along the first direction (direction ①) (e.g., the positive y-axis direction) or slide in along the second direction (e.g., the negative y-axis direction) with respect to the first housing 210.

According to various embodiments, the electronic device 200 may include a plurality of conductive members 321, 322, 323, and 324 segmented through a plurality of non-conductive portions 311, 312, 313, 314, and 315 disposed in the second lateral member 221 of the second housing 220. According to an embodiment, in the slide-in state, at least one conductive member 321, 324 of the plurality of conductive members 321, 322, 323, and 324 may be at least partially accommodated in the first space 2101 of the first housing 210 formed of a metallic material. For example, among the plurality of conductive members, the first conductive member 321 disposed in the right lateral portion 2211 and the fourth conductive member 324 disposed in the left lateral portion 2213 may be accommodated in the first space 2101 while corresponding to the right and left lateral portions 2111 and 2113 of the first housing 210.

According to various embodiments, the electronic device 200 may include conductive members 341 and 342 segmented through a plurality of non-conductive portions 331 and 332 disposed in the first lateral member 211 of the first housing 210. According to an embodiment, the conductive members 341 and 342 may include a fifth conductive member 341 segmented through a sixth non-conductive portion 331 in the right lateral portion 2111 of the first housing 210, and a sixth conductive member 342 segmented through a seventh non-conductive portion 332 in the left lateral portion 2113 of the first housing 210. According to an embodiment, the sixth non-conductive portion 331 may be disposed at a position corresponding to (overlapping with) the first non-conductive portion 311 in the slide-in state. According to an embodiment, the seventh non-conductive portion 332 may be disposed at a position corresponding to (overlapping with) the fifth non-conductive portion 315 in the slide-in state. Therefore, in the slide-in state, the fifth conductive member 341 matches at least a portion of the first conductive member 321, thereby operating like one conductive portion through the wireless communication circuit (e.g., the wireless communication module 192 in FIG. 1) and thus reducing the degree of degradation in the radiation performance of the antenna. According to an embodiment, in the slide-in state, the sixth conductive member 342 matches at least a portion of the fourth conductive member 324, thereby operating like one conductive portion through the wireless communication circuit 192 and thus reducing the degree of degradation in the radiation performance of the antenna. This matching configuration of the non-conductive portions 311, 331, 315, and 332 may be advantageous in a contact structure where the first and fifth conductive members 321 and 341 are physically contacted and the fourth and sixth conductive members 324 and 342 are physically contacted in the slide-in state.

Although not shown, it is obvious that even if the conductive portions used as antennas according to embodiments of the disclosure are applied to the first housing 210, the degree of degradation in the radiation performance of the antennas can be reduced through substantially the same arrangement structure as that of the above-described the dielectrics 215 and 315.

According to various embodiments, an electronic device (e.g., the electronic device 200 in FIG. 2A) may include a first housing (e.g., the first housing 210 in FIG. 2A), a second housing (e.g., the second housing 220 in FIG. 2A) slidably disposed with respect to the first housing wherein left and right lateral portions (e.g., the right lateral portion 2111 and the left lateral portion 2112 in FIG. 2A) of the first housing are formed of a metallic material at least in part, a wireless communication circuit (e.g., the wireless communication module 192 in FIG. 1) disposed in the second housing and configured to transmit or receive a radio signal through a conductive member (e.g., the first conductive member 321 in FIG. 3A) wherein left and right lateral portions (e.g., the right lateral portion 2211 and the left lateral portion 2112 in FIG. 3A) of the second housing are formed of the conductive member at least in part, a rollable display (e.g., the rollable display 230 in FIG. 2A) disposed to be supported by the first and second housings and bent or unfolded based on a slide-in or slide-out of the second housing, andat least one dielectric (e.g., the dielectric 215 in FIG. 3A) disposed between a metallic material portion of the first housing and the conductive member of the second housing in a slide-in state of the second housing into the first housing.

According to various embodiments, the conductive member of the second housing may be physically spaced apart from the metallic material portion of the first housing through the at least one dielectric.

The at least one dielectric includes a first dielectric disposed in the second housing.

The first dielectric is disposed to cover at least a portion of an edge of the rollable display.

According to various embodiments, at least a portion of the first dielectric may be disposed to have a first overlap amount with an edge of the rollable display when the rollable display is viewed from above.

According to various embodiments, the first dielectric may be disposed between the first housing and the second housing in the slide-in state.

According to various embodiments, at least a portion of the first housing may be disposed to have a second overlap amount greater than the first overlap amount with the edge of the rollable display when the rollable display is viewed from above.

According to various embodiments, the first dielectric may be disposed through a portion of a front surface of the second housing and/or a portion of a side surface extending from the front surface.

According to various embodiments, the at least one dielectric may further include a second dielectric that corresponds to the first dielectric in the slide-in state and is disposed in a first space of the first housing.

According to various embodiments, the at least one dielectric may be disposed in an internal space of the first housing, corresponding to the conductive member, in the slide-in state.

According to various embodiments, the at least one dielectric may have a dielectric constant in a range of 10 to 20.

According to various embodiments, the conductive member may be segmented through at least one non-conductive portion in at least a portion of the first housing.

According to various embodiments, at least a portion of the second housing may be accommodated in a first space of the first housing in the slide-in state.

According to various embodiments, the first housing may include a conductive first lateral member that forms an outward appearance of the electronic device, andthe second housing may include a conductive second lateral member that forms the outward appearance of the electronic device.

According to various embodiments, the left and right lateral portions of the second housing may be accommodated in the first space so as not to be visible from outside in the slide-in state.

According to various embodiments, the conductive member may be disposed in at least a portion of the right lateral portion and/or the left lateral portion of the second housing.

According to various embodiments, the at least one dielectric may be disposed to cover at least a portion of the right lateral portion and/or the left lateral portion of the second housing.

According to various embodiments, the first housing may include a first extension member extending from the first lateral member to the first space, and the second housing may include a second extension member extending from the second lateral member to a second space of the second housing. In the slide-in state, the second extension member may be accommodated in the first space so as not to be visible from the outside of the electronic device.

According to various embodiments, in the slide-in state, the at least one dielectric may be disposed in an area corresponding to the right lateral portion of the first housing in the second space and/or in an area corresponding to the left lateral portion of the first housing in the second space.

According to various embodiments, the at least one dielectric may include a first dielectric disposed in at least a portion of the second lateral member of the second housing, and a second dielectric disposed in the first lateral member, corresponding to the first dielectric, in the slide-in state.

Meanwhile, the embodiments disclosed in the specification and drawings are only presented as specific examples to easily explain the technical contents of the disclosure and help the understanding of the disclosure, and it is not intended to limit the scope of the disclosure.

## Claims

1. An electronic device (200) comprising:
a first housing (210), wherein left and right lateral portions (2111, 2113) of the first housing (210) comprise a metallic material at least in part;
a second housing (220) slidably coupled to the first housing (210), wherein left and right lateral portions (2211, 2213) of the second housing (220) comprise a conductive member (321, 324) at least in part;
a wireless communication circuit (192) disposed in the second housing (220) and configured to transmit or receive a radio signal through the conductive member (321, 324);
a flexible display (230) disposed to be supported by the first and second housings (210, 220), wherein at least a portion of the flexible display (230) is movable into an internal space (2101) of the first housing (210) based on a slide-in of the second housing (220) and is movable out of the internal space (2101) of the first housing (210) based on a slide-out of the second housing (220); and
at least one dielectric (215) disposed between the metallic material of the first housing (210) and the conductive member (321, 324) of the second housing (220) in a slide-in state of the second housing (220) into the first housing (210),
**characterized in that**
the at least one dielectric (215) includes a first dielectric (215) disposed in the second housing (220), the first dielectric (215) being disposed to cover at least a portion of an edge of the flexible display (230).

2. The electronic device (200) of claim 1, wherein the conductive member (321, 324) of the second housing (220) is physically spaced apart from the metallic material of the first housing (210) through the at least one dielectric (215).

3. The electronic device (200) of claim 1, wherein at least a portion of the first dielectric (215) is disposed to have a first overlap amount (g1) with an edge of the flexible display (230) when the flexible display (230) is viewed from above.

4. The electronic device (200) of claim 3, wherein the first dielectric (215) is disposed between the first housing (210) and the second housing (220) in the slide-in state.

5. The electronic device (200) of claim 4, wherein at least a portion of the first housing (210) is disposed to have a second overlap amount (g2) greater than the first overlap amount (g1) with the edge of the flexible display (230) when the flexible display (230) is viewed from above.

6. The electronic device (200) of claim 1, wherein the first dielectric (215) is disposed through a portion of a front surface of the second housing (220) and/or a portion of a side surface extending from the front surface.

7. The electronic device (200) of claim 1, wherein further includes a second dielectric (235) that corresponds to the first dielectric (215) in the slide-in state and is disposed in a first space (2101) of the first housing (210).

8. The electronic device (200) of claim 1, wherein the at least one dielectric (215) has a dielectric constant in a range of 10 to 20.

9. The electronic device (200) of claim 1, wherein the conductive member (321, 324) is segmented through at least one non-conductive portion (311, 312, 314, 315) in at least a portion of the second housing (220).

10. The electronic device (200) of claim 1, wherein at least a portion of the second housing (220) is accommodated in a first space (2101) of the first housing (210) in the slide-in state.

11. The electronic device (200) of claim 10, wherein the first housing (210) includes a conductive first lateral member (211) that forms an outward appearance of the electronic device, and
the second housing (220) includes a conductive second lateral member (221) that forms the outward appearance of the electronic device.

12. The electronic device (200) of claim 11, wherein the left and right lateral portions (2211, 2213) of the second housing (220) are accommodated in the first space (2101) so as not to be visible from outside of the electronic device (200) in the slide-in state.

## Patentansprüche

1. Elektronische Vorrichtung (200), umfassend:
ein erstes Gehäuse (210), wobei ein linker und ein rechter Seitenabschnitt (2111, 2113) des ersten Gehäuses (210) zumindest teilweise ein Metallmaterial umfassen;
ein zweites Gehäuse (220), das verschiebbar mit dem ersten Gehäuse (210) gekoppelt ist, wobei der linke und der rechte Seitenabschnitt (2211, 2213) des zweiten Gehäuses (220) zumindest teilweise ein leitfähiges Element (321, 324) umfassen;
eine drahtlose Kommunikationsschaltung (192), die in dem zweiten Gehäuse (220) angeordnet und konfiguriert ist, um ein Funksignal über das leitfähige Element (321, 324) zu übertragen oder zu empfangen;
eine flexible Anzeige (230), die so angeordnet ist, dass sie von dem ersten und dem zweiten Gehäuse (210, 220) gestützt wird, wobei zumindest ein Abschnitt der flexiblen Anzeige (230) basierend auf einem Hineinschieben des zweiten Gehäuses (220) in einen Innenraum (2101) des ersten Gehäuses (210) hinein bewegbar ist und basierend auf einem Herausschieben des zweiten Gehäuses (220) aus dem Innenraum (2101) des ersten Gehäuses (210) heraus bewegbar ist; und
zumindest ein Dielektrikum (215), das in einem Hineinschiebzustand des zweiten Gehäuses (220) in das erste Gehäuse (210) zwischen dem Metallmaterial des ersten Gehäuses (210) und dem leitfähigen Element (321, 324) des zweiten Gehäuses (220) angeordnet ist,
**dadurch gekennzeichnet, dass** das zumindest eine Dielektrikum (215) ein erstes Dielektrikum (215) beinhaltet, das in dem zweiten Gehäuse (220) angeordnet ist, wobei das erste Dielektrikum (215) so angeordnet ist, dass es zumindest einen Abschnitt einer Kante der flexiblen Anzeige (230) bedeckt.

2. Elektronische Vorrichtung (200) nach Anspruch 1, wobei das leitfähige Element (321, 324) des zweiten Gehäuses (220) durch das zumindest eine Dielektrikum (215) physisch von dem Metallmaterial des ersten Gehäuses (210) beabstandet ist.

3. Elektronische Vorrichtung (200) nach Anspruch 1, wobei zumindest ein Abschnitt des ersten Dielektrikums (215) so angeordnet ist, dass er bei Betrachtung der flexiblen Anzeige (230) von oben ein erstes Überlappungsausmaß (g1) mit einer Kante der flexiblen Anzeige (230) aufweist.

4. Elektronische Vorrichtung (200) nach Anspruch 3, wobei das erste Dielektrikum (215) in dem Hineinschiebzustand zwischen dem ersten Gehäuse (210) und dem zweiten Gehäuse (220) angeordnet ist.

5. Elektronische Vorrichtung (200) nach Anspruch 4, wobei zumindest ein Abschnitt des ersten Gehäuses (210) so angeordnet ist, dass er bei Betrachtung der flexiblen Anzeige (230) von oben ein zweites Überlappungsausmaß (g2) aufweist, das größer ist als das erste Überlappungsausmaß (g1) mit der Kante der flexiblen Anzeige (230).

6. Elektronische Vorrichtung (200) nach Anspruch 1, wobei das erste Dielektrikum (215) durch einen Abschnitt einer vorderen Fläche des zweiten Gehäuses (220) und/oder einen Abschnitt einer Seitenfläche, die sich von der vorderen Fläche erstreckt, angeordnet ist.

7. Elektronische Vorrichtung (200) nach Anspruch 1, wobei sie ferner ein zweites Dielektrikum (235) beinhaltet, das in dem Hineinschiebzustand dem ersten Dielektrikum (215) entspricht und in einem ersten Raum (2101) des ersten Gehäuses (210) angeordnet ist.

8. Elektronische Vorrichtung (200) nach Anspruch 1, wobei das zumindest eine Dielektrikum (215) eine Dielektrizitätskonstante in einem Bereich zwischen 10 und 20 aufweist.

9. Elektronische Vorrichtung (200) nach Anspruch 1, wobei das leitfähige Element (321, 324) durch zumindest einen nicht leitfähigen Abschnitt (311, 312, 314, 315) in zumindest einem Abschnitt des zweiten Gehäuses (220) segmentiert ist.

10. Elektronische Vorrichtung (200) nach Anspruch 1, wobei zumindest ein Abschnitt des zweiten Gehäuses (220) in dem Hineinschiebzustand in einem ersten Raum (2101) des ersten Gehäuses (210) aufgenommen ist.

11. Elektronische Vorrichtung (200) nach Anspruch 10, wobei das erste Gehäuse (210) ein leitfähiges erstes Seitenelement (211) beinhaltet, das ein äußeres Erscheinungsbild der elektronischen Vorrichtung ausbildet, und
das zweite Gehäuse (220) ein leitfähiges zweites Seitenelement (221) beinhaltet, das das äußere Erscheinungsbild der elektronischen Vorrichtung ausbildet.

12. Elektronische Vorrichtung (200) nach Anspruch 11, wobei der linke und der rechte Seitenabschnitt (2211, 2213) des zweiten Gehäuses (220) so in dem ersten Raum (2101) aufgenommen sind, dass sie von außerhalb der elektronischen Vorrichtung (200) im Hineinschiebzustand von außen nicht sichtbar sind.

## Revendications

1. Dispositif électronique (200), comprenant :
un premier boîtier (210), dans lequel des parties latérales gauche et droite (2111, 2113) du premier boîtier (210) comprennent au moins en partie un matériau métallique ;
un deuxième boîtier (220) couplé de manière coulissante au premier boîtier (210), dans lequel des parties latérales gauche et droite (2211, 2213) du deuxième boîtier (220) comprennent au moins en partie un élément conducteur (321, 324) ;
un circuit de communication sans fil (192) disposé dans le deuxième boîtier (220) et configuré pour transmettre ou recevoir un signal radio par l'intermédiaire de l'élément conducteur (321, 324) ;
un affichage flexible (230) disposé pour être supporté par les premier et deuxième boîtiers (210, 220), dans lequel au moins une partie de l'affichage flexible (230) peut être déplacée dans un espace interne (2101) du premier boîtier (210) sur la base d'un glissement vers l'intérieur du deuxième boîtier (220) et peut être déplacée hors de l'espace interne (2101) du premier boîtier (210) sur la base d'un coulissement vers l'extérieur du deuxième boîtier (220) ; et
au moins un diélectrique (215) disposé entre le matériau métallique du premier boîtier (210) et l'élément conducteur (321, 324) du deuxième boîtier (220) dans un état de glissement vers l'intérieur du deuxième boîtier (220) dans le premier boîtier (210), **caractérisé en ce que** l'au moins un diélectrique (215) comprend un premier diélectrique (215) disposé dans le deuxième boîtier (220), le premier diélectrique (215) étant disposé de manière à recouvrir au moins une partie d'un bord de l'affichage flexible (230).

2. Dispositif électronique (200) selon la revendication 1, dans lequel l'élément conducteur (321, 324) du deuxième boîtier (220) est physiquement espacé du matériau métallique du premier boîtier (210) par l'au moins un diélectrique (215).

3. Dispositif électronique (200) selon la revendication 1, dans lequel au moins une partie du premier diélectrique (215) est disposée de manière à présenter un premier degré de chevauchement (g1) avec un bord de l'affichage flexible (230) lorsque l'affichage flexible (230) est vu depuis le dessus.

4. Dispositif électronique (200) selon la revendication 3, dans lequel le premier diélectrique (215) est disposé entre le premier boîtier (210) et le deuxième boîtier (220) dans l'état de glissement vers l'intérieur.

5. Dispositif électronique (200) selon la revendication 4, dans lequel au moins une partie du premier boîtier (210) est disposée de manière à présenter une deuxième valeur de chevauchement (g2) supérieure à la première valeur de chevauchement (g1) avec le bord de l'affichage flexible (230) lorsque l'affichage flexible (230) est vu depuis le dessus.

6. Dispositif électronique (200) selon la revendication 1, dans lequel le premier diélectrique (215) est disposé à travers une partie d'une surface avant du deuxième boîtier (220) et/ou une partie d'une surface latérale s'étendant à partir de la surface avant.

7. Dispositif électronique (200) selon la revendication 1, dans lequel il comprend en outre un deuxième diélectrique (235) qui correspond au premier diélectrique (215) dans l'état de glissement vers l'intérieur et qui est disposé dans un premier espace (2101) du premier boîtier (210).

8. Dispositif électronique (200) selon la revendication 1, dans lequel l'au moins un diélectrique (215) présente une constante diélectrique comprise dans la plage de 10 à 20.

9. Dispositif électronique (200) selon la revendication 1, dans lequel l'élément conducteur (321, 324) est segmenté par au moins une partie non conductrice (311, 312, 314, 315) dans au moins une partie du deuxième boîtier (220).

10. Dispositif électronique (200) selon la revendication 1, dans lequel au moins une partie du deuxième boîtier (220) est accueillie dans un premier espace (2101) du premier boîtier (210) dans l'état de glissement vers l'intérieur.

11. Dispositif électronique (200) selon la revendication 10, dans lequel le premier boîtier (210) comprend un premier élément latéral conducteur (211) qui forme un aspect extérieur du dispositif électronique, et
le deuxième boîtier (220) comprend un deuxième élément latéral conducteur (221) qui forme l'aspect extérieur du dispositif électronique.

12. Dispositif électronique (200) selon la revendication 11, dans lequel les parties latérales gauche et droite (2211, 2213) du deuxième boîtier (220) sont accueillies dans le premier espace (2101) de manière à ne pas être visibles depuis l'extérieur du dispositif électronique (200) dans l'état de glissement vers l'intérieur.
